# EUROPEAN PATENT APPLICATION

(11) **EP 1 832 918 A1**
(43) Date of publication of application: **12.09.2007**
(21) Application number: 07004701.4
(22) Date of filing: 07.03.2007
(51) Int. Cl.: G03B 17/53, G03B 27/00, G03B 29/00, G07F 17/40, H04N 1/00

(54) **Kiosk with photographic digital printer**

(30) Priority: 10.03.2006 JP 2006065521
(71) Applicant: Sony Corporation, Minato-ku Tokyo (JP)
(72) Inventor: Kuroda, Tatsuya, Minato-ku, Tokyo (JP); Matoba, Masato, Minato-ku, Tokyo (JP)
(74) Representative: Müller, Frithjof E.

(57) **Abstract**

A product-creating apparatus is disclosed. The product-creating apparatus includes: an image acquisition portion acquiring image data; a product-creating portion creating products using the image data; a manipulation input portion permitting one to perform manipulations for making settings to create the products using the image data and to perform a specifying manipulation for selecting a method of reception from immediate reception of the products and later reception; and a control portion.

## Description

### CROSS REFERENCE TO RELATED APPLICATION

The present invention contains subject matter related to Japanese Patent Application JP 2006-065521 filed in the Japanese Patent Office on March 10, 2006, the entire contents of which being incorporated herein by reference.

### BACKGROUND OF THE INVENTION

### 1. Field of the Invention

The present invention relates to apparatus, method, and program for creating products using image data. For example, the invention is adapted for use in printing services in which photographic images obtained by printing image data are created as finished products.

### 2. Description of the Related Art

[Patent reference 1] JP-A-2001-109592
[Patent reference 2] JP-A-2002-359709

As an example, self-service printing equipment (which may also be known as a kiosk type terminal) is known. This equipment is installed in a shop such as a photo service shop or convenience store. The user or customer himself/herself manipulates the equipment to print out images taken by a digital still camera.

In particular, the customer records image data taken by photography onto a recording medium, brings the medium into a shop, and loads the medium into printing equipment. A memory card such as a "MEMORY STICK" (Sony's registered trademark) can be used as the recording medium.

The printing equipment is provided with a slot for a memory card. If a customer loads a memory card into the slot, the printing equipment reads in image data stored in the card and displays the data. The customer performs manipulations, e. g. , selects images to be printed out from the displayed images and sets the number of prints the size. The printing equipment accepts orders in response to such customer's manipulations and performs specified printing. The customer can receive the printed photographs on the spot.

### SUMMARY OF THE INVENTION

In recent years, digital still cameras have become widespread. With this trend, many people take many photos. There is an increasing chance that the printing equipment described above is used in shops. Therefore, the printing equipment is used more frequently. At the same time, the number of prints made per person tends to increase.

However, with the printing equipment in a shop, the customer has to wait on the spot until the ordered prints are completed. In the case of a customer having a large number of ordered prints, he or she has to wait for a very long time until the printing is completed.

With this printing equipment, if a customer uses it, for example, in a shop to create finished products such as printed images and if he or she receives them, the customer has to wait until the creation of the products is completed. In some cases, the customer has to wait for a long time.

Accordingly, it is desirable to have a product-creating apparatus which is installed, for example, in a shop and which does not require that a customer wait on the spot until production of the products is completed, e.g., until end of printing.

A product-creating apparatus according to one embodiment of the present invention has: an image acquisition portion acquiring image data; a product-creating portion creating products using the image data; a manipulation input portion permitting one to perform manipulations for making settings to create the products using the image data and to perform a specifying manipulation to select a method of reception from immediate reception of the products and later reception; and a control portion. When the image data is acquired by the image acquisition portion and the immediate reception is specified by a manipulation performed through the manipulation input portion to specify a method of reception, the control portion causes the product-creating portion to execute creation of the products regarding the acquired image data. On the other hand, when the later reception is specified by a manipulation performed through the manipulation input portion to specify a method of reception, the control portion performs processing for registering information about the processing for creating the products regarding the image data into a creation waiting list.

For example, the product-creating portion is a printing portion performing printing of image data, and creates printed images as finished products using the image data.

A product-creating apparatus of another embodiment of the invention further includes a money-receiving transaction portion, and wherein the control portion controls the product-creating portion to execution creation of products regarding the acquired image data or performs processing for registering product-creation processing information about the acquired image data into the creation waiting list in response to confirmation of payment for a fee performed by the money-receiving transaction portion.

Alternatively, the manipulation input portion permits one to perform a manipulative input for initiating processing and the control portion controls the product-creating portion to execute creation of products regarding the acquired image data or performs processing for registering product-creation processing information about the acquired image data into the creation waiting list when the manipulation input portion confirms the manipulation input for starting processing.

Alternatively, the control portion causes the product-creating portion to create products based on the product-creating processing information registered in the creation waiting list when any manipulation using the manipulation input portion is not performed.

Alternatively, when the manipulation for specifying a method of reception indicates later reception, the manipulation input portion permits a manipulation for specifying day and time, when later reception is selected as a result of the manipulation for specifying a method of reception using the manipulation input portion, the control portion registers product-creating processing information including information about the specified day and time into the creation waiting list, and the control portion causes the product-creating portion to execute creation of products based on the product-creating processing information and based on a result of a comparison between the information about day and time and the present day and time regarding the product-creating processing information registered in the creation waiting list.

A product-creating apparatus of a further embodiment of the invention further includes a display portion, and wherein when a manipulation for requiring a list to be displayed is performed using the manipulation input portion, the control portion displays the product-creating processing information registered in the creation waiting list on the display portion and causes the product-creating portion to execute creation of products based on product-creating processing information which is included in the displayed product-creating processing information and which is selected by a selection manipulation performed using the manipulation input portion.

In accordance with one embodiment of the present invention, there is provided a method of creating products by a product-creating apparatus having an image acquisition portion acquiring image data, a product-creating portion creating products using the image data, and a manipulation input portion which permits one to perform setting manipulations for creating the products using the image data and which permits one to perform specifying manipulations to select a method of reception from immediate reception of the products and later reception.

The product-creating method includes the steps of: acquiring image data by the image acquisition portion; accepting the manipulation performed using the manipulation input portion to specify a method of reception; causing the product-creating portion to execute creation of the products regarding the acquired image data in a case where the immediate reception is specified by the manipulation for specifying a method of reception performed with the manipulation input portion; and performing processing for registering information about processing for creation of the products regarding the acquired image data into a creation waiting list in a case where the later reception is specified by the manipulation with the manipulation input portion.

A program according to one embodiment of the present invention is used to cause a product-creating apparatus to execute the above-described method of creating products.

In the present invention described so far, when a customer performs a manipulative input for ordering the product-creating apparatus to create products in a shop, the control portion immediately makes a decision as to whether the customer requires to get the products immediately. Where the customer does not require immediate reception, information about the processing for creation of the products is registered as contents of the order into the creation waiting list. Creation of the products based on the information about processing for creation of the products registered in the creation waiting list will be carried out automatically according to the day and time or carried out by manipulations performed by a clerk of the shop. For example, when a printer apparatus is assumed, the customer can select whether he wishes to receive photographic images immediately or receive them later when a manipulation is performed to make an input to make an order of printing of the images. When the customer wishes to receive them later, information about processing for printing that indicates the contents of the order is registered in a print waiting list. Printing based on the information about processing of printing registered in the print waiting list may be subsequently done automatically according to the day and time or carried out in response to manipulations of a clerk of the shop.

This product-creating apparatus according to an embodiment of the invention is used to create products (goods) using the image data after the customer offers image data to the apparatus and makes settings. The apparatus may offer an optical disc such as a CD (compact disc) or DVD (digital versatile disc), on which the image data, for example, has been recorded, to the customer.

According to the embodiments of the present invention, when a customer orders the product-creating apparatus to create products in a shop or the like, the customer can select whether he wishes to receive the products such as photographic images even if urged to wait for some time on the spot or wishes to receive the products later. Therefore, if he does not want to wait until completion of the products, the customer may specify later reception; he does not need to wait on the spot for a long time. That is, for a person who dislikes waiting, the apparatus does not require him to wait on the spot. For example, for a person who orders a printer apparatus in a shop to print a large number of photos, if he specifies later reception of the photos, he is not required to wait for a long time on the spot until the printing is completed.

Furthermore, the shop where the product-creating apparatus is installed can run the apparatus efficiently, because the time in which an operation for creating the products (such as printing) is performed can be shifted to non-busy hours and the operation be carried out.

### BRIEF DESCRIPTION OF THE DRAWINGS

Figs. 1A and 1B are perspective views of printer apparatus according to one embodiment of the invention.
Fig. 2 is a block diagram of the printer apparatus according to one embodiment of the invention.
Fig. 3 is a flowchart illustrating processing (subroutine) performed in the printer apparatus according to one embodiment of the invention.
Fig. 4 is a flowchart illustrating other processing (subroutine) performed in the printer apparatus according to one embodiment of the invention.
Figs. 5A and 5B represent examples of screen displayed on a display screen in accordance with one embodiment of the invention.
Fig. 6 represents an example of screen displayed on a display screen in accordance with one embodiment of the invention.
Figs. 7A and 7B represent examples of screen displayed on a display screen to prompt one to select a method of reception in accordance with one embodiment of the invention.
Figs. 8A and 8B represent other examples of screen displayed on a display screen to prompt one to select a method of reception in accordance with one embodiment of the invention.
Fig. 9 is a graph illustrating a print waiting list according to one embodiment of the invention.
Fig. 10 is a flowchart illustrating processing for performing automated printing in accordance with one embodiment of the invention.
Fig. 11 is a flowchart illustrating processing for performing printing in accordance with one embodiment of the invention.
Fig. 12 is a diagram illustrating an example of a displayed list of items of print processing information in accordance with one embodiment of the invention.
Fig. 13 is a block diagram of a disc recorder apparatus according to one embodiment of the invention.
Fig. 14 is a flowchart illustrating processing performed by the disc recorder apparatus in accordance with one embodiment of the invention.

### DESCRIPTION OF THE PREFERRED EMBODIMENTS

Embodiments of the present invention are hereinafter described. A printer apparatus is herein described as one example of a product-creating apparatus.

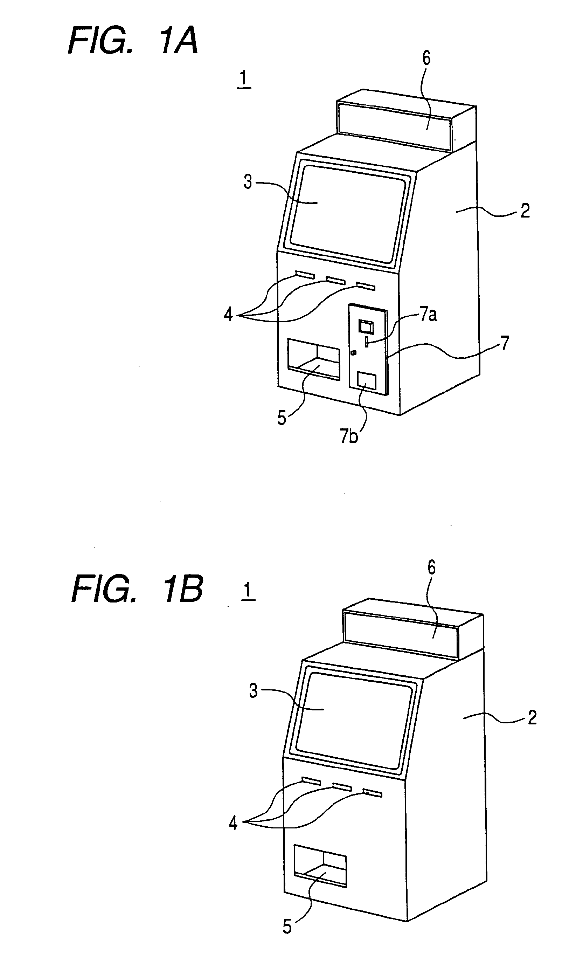

Figs. 1A and 1B show examples of the outer appearance of printer apparatus 1. This apparatus 1 is installed in a shop such as a photo shop or convenience store or in commercial facilities such as theme park or tourist site. It is assumed that the printer apparatus acts as a print-ordering terminal that an ordinary user (customer) can use at will.

An advertisement display portion 6 is disposed on the top plate of the enclosure 2 of the printer apparatus 1. For example, an LED (light-emitting diode) bulletin board is used as the advertisement display portion 6.

A display-and-input portion 3 is disposed on an upper part of the front side of the enclosure 2. For instance, a touch panel display is used as the display-and-input portion 3. Menus for manipulations, guiding messages for manipulations, and printed images are displayed on the display-and-input portion 3. The user performs manipulations according to the displayed sequence of manipulations. Manipulative inputs are made by touching arbitrary regions on the touch panel.

Instead of the touch panel, a keyboard having manipulated keys arranged thereon or a computer mouse may be mounted as a manipulation portion.

Memory card slots 4 into which a memory card can be loaded are formed in the center of the enclosure 2. The memory card is a recording medium in the form of a card and has a semiconductor memory therein. There are plural kinds of memory cards according to different standards. To accommodate these cards, the plural memory card slots 4 corresponding to the different standards are juxtaposed.

A photo takeout port 5 is formed in a lower part of the enclosure 2 to permit the customer to take out finished, printed photos.

As shown in Fig. 1A, a money insertion portion 7 is disposed in a lower part of the front side of the enclosure 2. The money insertion portion 7 has a coin insertion port 7a and a coin return port 7b. The customer pays for the ordered prints through the money insertion portion 7.

A credit card transaction unit, prepaid card transaction unit, electronic money transaction unit, or the like may be used as the money insertion portion 7.

Meanwhile, Fig. 1B shows an example in which the money insertion portion 7 is omitted. In this case, the customer pays the fee to a shop clerk or printing services are offered free of charge.

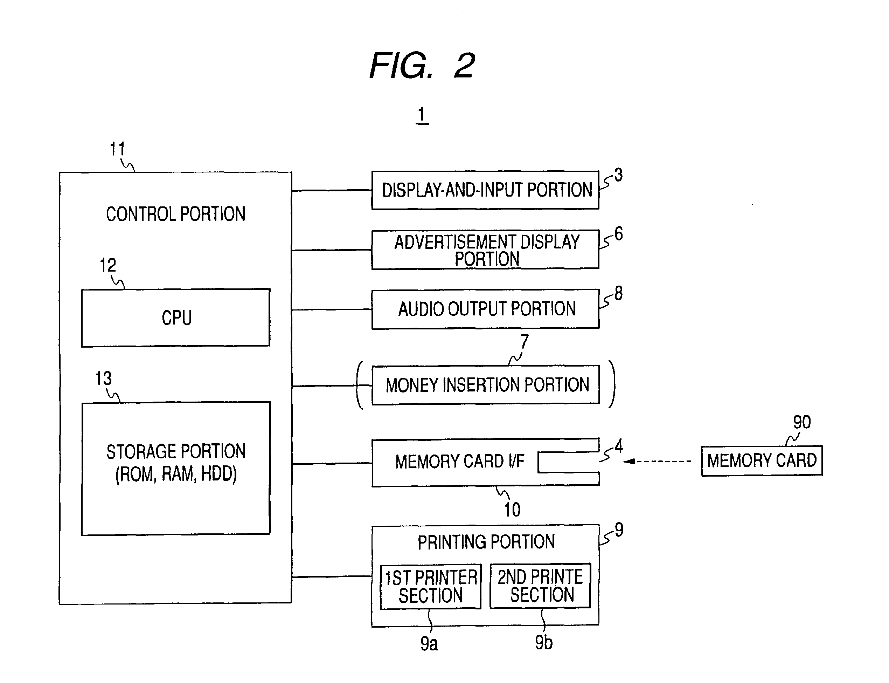

Fig. 2 shows an example of the internal structure of the printer apparatus 1.

The printer apparatus 1 has a control portion 11, the display-and-input portion 3, the advertisement display portion 6, an audio output portion 8, the money insertion portion 7, a memory card interface portion 10, and a printing portion 9.

The control portion 11 controls operations beginning with acceptance of image data and ending with execution of printing. The control includes display of various confirmative screens or windows to the user. The control portion 11 includes a CPU (central processing unit) 12 and a storage portion 13 as main components.

The CPU 12 performs computational processing for control of the operation of the printer apparatus 1 and supplies control signals to various portions. The CPU 12 controls various portions in response to an operation program or manipulative inputs to realize operations (described later).

The CPU 12 is constantly measuring the present time (year, month, day, hour, minute, and second) as processing for counting the time in software. A clock portion made of hardware may also be provided.

The storage portion 13 is a storage device used to store program codes executed by the CPU 12, to temporarily store working data in execution, or to store image data. In the case of this figure, the storage portion 13 is shown to include both volatile and nonvolatile memories. For example, the storage portion includes a ROM (read only memory) for storing programs and a nonvolatile memory such as a RAM (random access memory) or EEP-ROM (electrically erasable and programmable read only memory) for securing a working area for computation and various kinds of temporal storage.

Furthermore, a hard disc drive unit is also shown to be included in the storage portion 13. The hard disc drive unit is used to store image data accepted, for example, from a memory card 90.

The display-and-input portion 3 includes a display device and an input device. Instructions for the user, various screens prompting the user to perform manipulations, and images to be printed are displayed on the display device. When a manipulation is performed on the touch panel, the input device informs the CPU 12 that the manipulation has been made. The CPU 12 controls operations for providing displays on the display-and-input portion 3 to execute operations for providing various displays as described later. Furthermore, the CPU performs processing for accepting user's manipulations entered from the touch panel of the display-and-input portion 3.

The advertisement display portion 6 turns on and off LEDs, for example, in a predetermined pattern, under control of the CPU 12 to display given advertisement information.

The audio output portion 8 is an audio system for outputting audible messages or electronic sound for giving instructions to the user, promoting the user to perform manipulations, or calling user's notice. The audio output portion 8 includes an audio signal generation portion, an audio circuit, and loud speakers. The CPU 12 controls the audio output portion 8 to produce given speech output at given timing.

The money insertion portion 7 is a device portion permitting the user to perform paying transactions by inserting coins. The money insertion portion 7 includes a coin discerning portion discerning each coin inserted into the coin insertion port 7a, a computational processing portion calculating the sum of the values of inserted coins and the change, a coin storage portion, and a repayment processing portion discharging the change or returned money to the coin return port 7b. Where the printer apparatus asks the user to pay, the money insertion portion 7 informs the CPU 12 of the total value of the inserted coins and bills. The CPU 12 checks whether an appropriate amount of money has been inserted into the money insertion portion 7.

In the case of the printer apparatus 1 of Fig. 1B, the money insertion portion 7 is omitted.

The memory card interface portion 10 is an image acquisition portion that acquires image data by transferring data from the memory card 90 loaded in the memory card slot 4. The CPU 12 reads image data from the memory card 90 via the memory card interface portion 10 to acquire image data from the memory card 90 that has been brought in by the user. The CPU 12 stores the data, which has been read from the memory card 90, for example, into the hard disc drive unit within the storage portion 13.

The printing portion 9 includes one or more printing devices for printing image data on the paper. In the case of this example, the printing portion has two printing devices, i.e., a first printer section 9a and a second printer section 9b. The plural printing devices are mounted because a different type of printer is required according to required quality, the printer has to cope with various sizes of paper, and the printing time is preferably shortened by utilizing the plural printing devices in parallel.

The CPU 12 controls execution of printing by the first printer section 9a and second printer section 9b of the printing portion 9. For example, in cases where the first and second printer sections are made to correspond to different sizes of printing paper, the CPU 12 selects either one according to the printing size specified by the user and executes printing.

The print images printed by the printing portion 9 are sent as finished products to be offered to the user to the photo takeout port 5.

The printer apparatus 1 of the present embodiment is constructed as described so far.

Various portions of the claims attached herein correspond to the following apparatus portions of the printer apparatus 1:
image acquisition portion: memory card slots 4, memory card interface portion 10
product-creating portion: printing portion 9
manipulative input portion: display-and-input portion 3
control portion: control portion 11
money-receiving transaction portion: money insertion portion 7
display portion: display-and-input portion 3

This printer apparatus 1 is installed in a shop. A user who is a customer can print image data using the printer apparatus 1 after taking the image data by his own digital still camera.

First, the customer who is carrying the memory card 90 inserts it into the memory card slot 4 and enters minimum and bare information that is needed to make an order according to the manipulation procedure displayed on the display device. In the case of the printer apparatus 1 according to the present embodiment, when the information is entered, the user can select a method of reception, i.e., specified manipulation, from immediate reception and later reception.

Where the user specifies the immediate reception, the printer apparatus 1 immediately carries out printing based on the data specified by the user (e.g., the number of prints and their size) regarding all or some of the images read in from the memory card 90. In this case, the user waits on the spot and can receive the printed photographic images.

Meanwhile, where the user specifies later reception, the printer apparatus 1 does not carry out printing at that instant of time. The apparatus registers information about processing for creation of products including the contents of settings made based on the present manipulations of the user and reception time into the print waiting list. The printing will be performed at a later instant of time automatically or in response to manipulations of a clerk of the shop. In this case, when the user revisits the shop at a specified time, he can receive the products, i.e., printed photographic images.

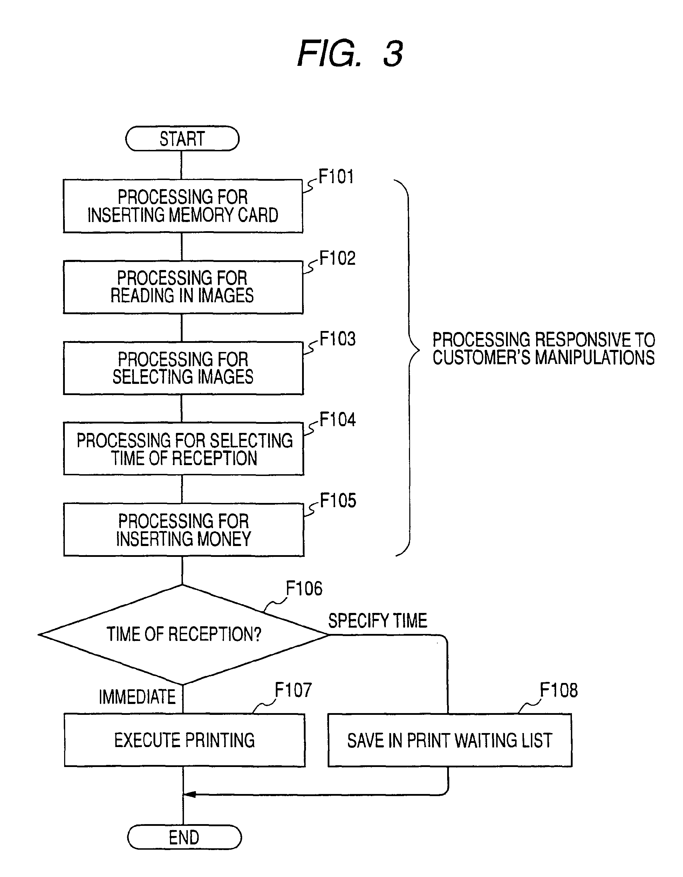

These operations are described in detail by referring to Fig. 3 et seq.

Fig. 3 illustrates processing performed under control of the control portion 11 of the printer apparatus 1 of Fig. 1A in a case where the user (customer) manipulates the printer apparatus 1 to cause the apparatus 1 to perform desired printing.

Steps F101-F105 of the flowchart of Fig. 3 are carried out by the control portion 11 in response to user's manipulations.

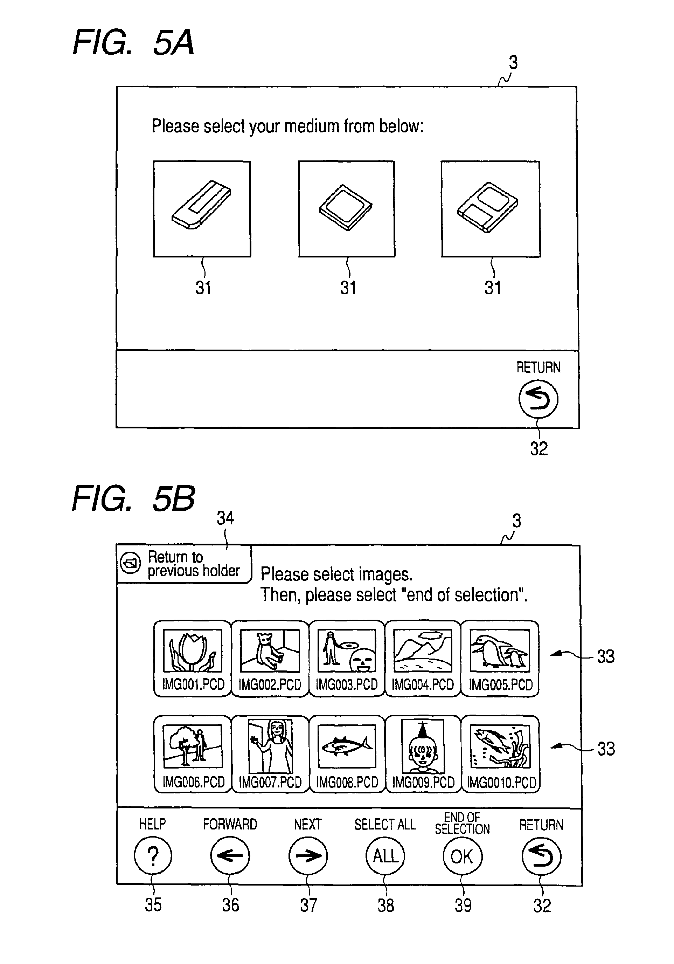

In the step F101, processing regarding insertion of the memory card 90 of the user is performed. For example, the control portion 11 is displaying an image of the title of printing services on the display-and-input portion 3 at normal times. The user can recognize that the printer apparatus 1 is an apparatus providing printing services by viewing the display screen. When user's touch on the display screen for initiating use is detected, the control portion 11 causes the display-and-input portion 3 to display a screen, for example, as shown in Fig. 5A.

The screen of Fig. 5A is used to prompt the user to select the kind of the memory card 90 carried by the user. Plural kinds of memory card 90 are displayed as an image 31 for selection of a memory card. A return button 32 for returning the display to the previous screen is also displayed as a manipulation icon on the screen of Fig. 5A and on various screens described later. When the user touches the return button 32, the control portion 11 returns the display to the previous screen.

In response to the screen as shown in Fig. 5A, the user touches the image 31 for selecting a memory card that corresponds to the kind of the memory card 90 carried by the user. The control portion 11 detects the manipulation for the selection and thus recognizes the kind of the memory card 90.

After detecting the user's manipulation (action) for the selection, the control portion 11 displays a message to prompt the user to insert the memory card 90 into one of the memory card slots 4 that corresponds to the kind.

When the memory card 90 is loaded into the corresponding memory card slot 4, the control portion 11 performs processing for reading image data from the loaded memory card 90 in step F102. In particular, the CPU 12 reads in the image data stored in the memory card 90 via the memory card interface portion 10, and stores the image data into the storage portion 13 that is a hard disc drive unit, for example.

In the present embodiment, it is assumed that the user brings in image data by means of the memory card 90. Alternatively, image data may be brought in by an optical disc or flexible disc and read into the printer apparatus 1. Furthermore, the image data can be transmitted to the printer apparatus 1 by data transmission from a cell phone, PDA (personal digital assistant), or the like. Transmissions by wireless communications complying with IrDA (Infrared Data Association), Bluetooth, or other standards are also possible.

On completion of the processing for reading in the image data, processing for selecting an image (step F103) is performed. The control portion 11 displays a list of image data sets read in by the display-and-input portion 3, for example, as shown in Fig. 5B. For example, a list of thumbnail images indicated by the image data sets read in is displayed. On the screen of Fig. 5B, the thumbnail images 33 indicated by the image data sets, the return button 32 being a manipulation icon for returning to the previous screen, a return button 34 for returning to the previous holder, a help button 35, a page forward button 36, a page backward button 37, a full select button 38, a selection completion button 39, and so on are displayed. When the user touches any one of the various icons 32, 34, 35, 36, 37, 38, and 39, the control portion 11 performs various kinds of processing such as turning back of the screen, display of guiding messages, page forward motion, page backward motion, full selection, and completion of selections.

The user can select images to be printed and make settings for the images by touching the various manipulation icons 32, 34, 35, 36, 37, 38, 39 and thumbnail images 33.

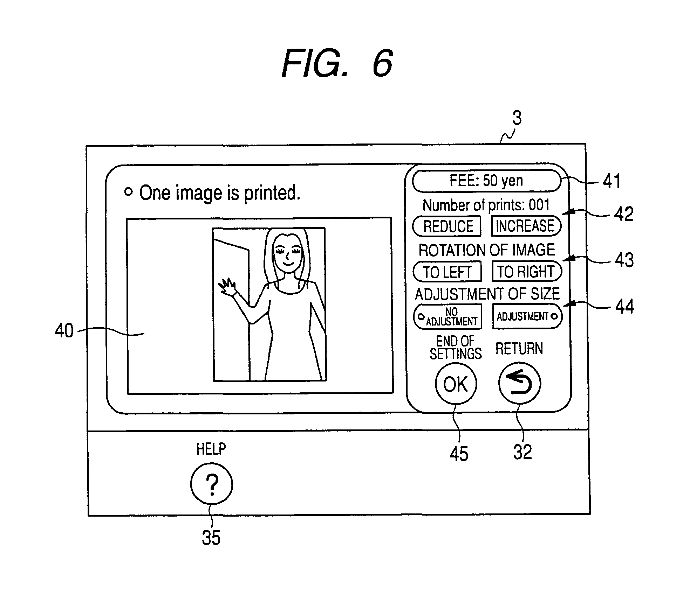

For example, when the user touches any one of the thumbnail images 33, the control portion 11 causes the display-and-input portion 3 to display a screen, for example, as shown in Fig. 6 as a setting screen for the image.

On this setting screen, an enlargement 40 of the image selected by the user, a display of the fee 41, a button 42 for setting the number of prints, a rotation-setting button 43, a size adjustment button 44, a setting end button 45, the return button 32, and the help button 35 are displayed.

The user can adjust the number of prints, rotate the images, and adjust the size regarding the selected images, using the print-number setting button 42, rotation-setting button 43, and size adjustment button 44.

When the user touches the setting end button 45, the control portion 11 establishes the settings heretofore made by user's manipulations. That is, the settings are established for the selected images. The screen status is returned to the screen on which a list is displayed as shown in Fig. 5B.

The user selects images to be printed from the thumbnail images 33 in the list displayed as shown in Fig. 5B. On the setting screen as shown in Fig. 6, the number of prints is determined. The control portion 11 establishes the settings for the images.

With respect to the processing of step F103, the control portion 11 displays a menu for selecting images to be printed and displays screens for settings for the selected images. In response to user's manipulations, the control portion determines the selected images and their settings. When the selection completion button 39 is touched on the screen of Fig. 5B, the control portion 11 determines that selections made by the user and setting manipulations are completed. The images to be printed, the number of prints of the images, and settings for rotation, size, and other parameters are established.

The control portion 11 then performs processing for selecting a reception time in step F104.

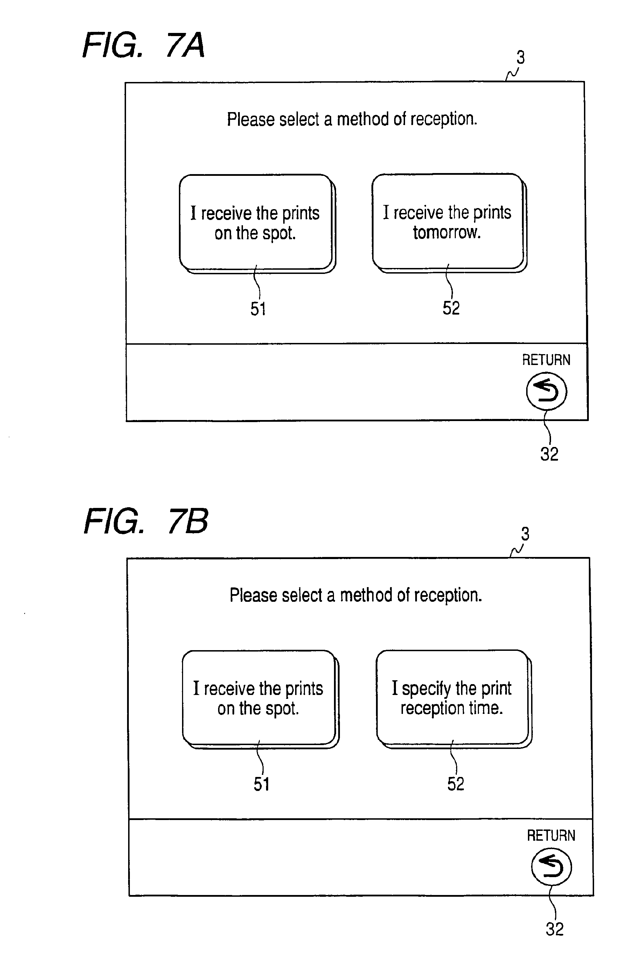

The control portion causes the display-and-input portion 3 to display a screen for prompting the user to select a method of reception, for example, as shown in Fig. 7A. In this embodiment, the user can select whether he receives the products on the spot (immediate reception) or tomorrow (later reception), using the reception selection buttons 51 and 52.

The selection of the method of reception is made between immediate reception and later reception. Various modes of screen for the selection and various methods of selection are conceivable.

In the example of Fig. 7A, the user can select between immediate reception and tomorrow reception. Instead of restricting the reception time to "tomorrow" or the like, the user may specify the time.

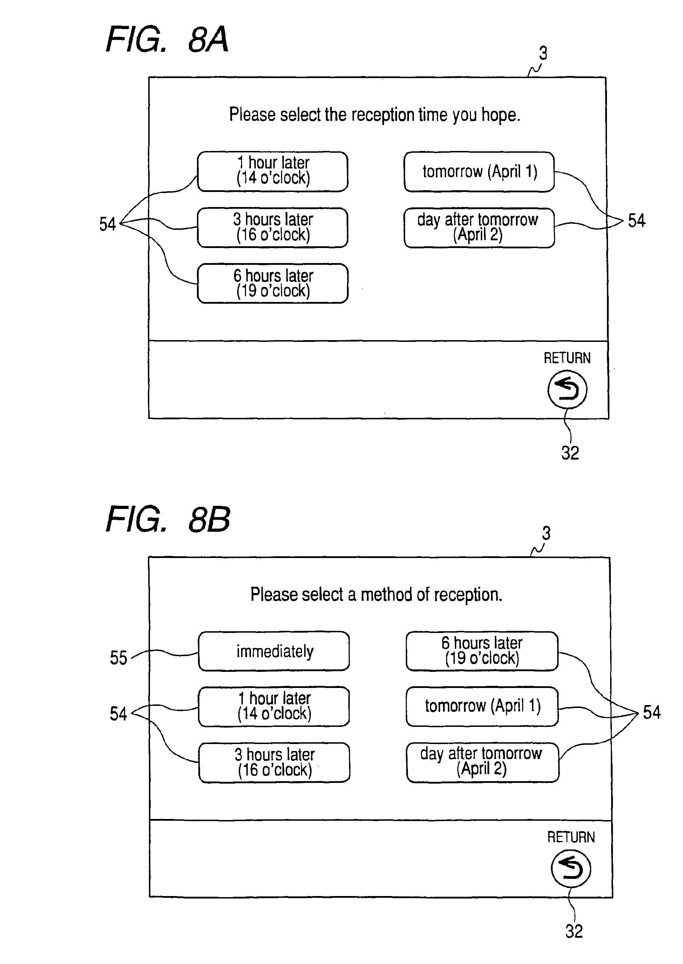

For example, as shown in Fig. 7B, the user can select using the reception selection buttons 51 and 52 as to whether the products are received on the spot or later. When later reception is selected with a reception selection button 53, the control portion 11 displays a screen for specifying the reception time as shown in Fig. 8A. Using any one of reception time specifying buttons 54, the user can specify the time, for example, from 1 hour later, 3 hours later, 6 hours later, tomorrow, and the day after tomorrow.

Furthermore, a selection screen as shown in Fig. 8B may be displayed without making a screen transition from Fig. 7B to Fig. 8A. That is, an immediate reception specifying button 55 and the time specifying buttons 54 are simultaneously displayed. Where the user hopes for the immediate reception, he touches the immediate reception specifying button 55. Where the user hopes for the later reception, he touches one of the time specifying buttons 54 which bears a representation of the time he hopes.

Where the time specifying buttons 54 are so designed that the user can select reception times as times relative to the present time such as "1 hour later" and "3 hours later", the days and times corresponding to the relative times may be displayed as shown in Fig. 8A or 8B. Where the present time is 13 o'clock, March 31, for example, "14 o'clock" is displayed as a reception time on the time specifying button 54 about "1 hour later". "April 1" is displayed as a reception time on the time specifying button 54 about "tomorrow".

To permit the user to specify and select the reception time from a wider range of choices, a screen may be displayed to permit the user to actually enter day and time numerically instead of buttons as shown in Figs. 8A and 8B.

Because of the screens displayed as described above and user's manipulations in response to the screens, the control portion 11 discerns the reception day and time that the user hopes. At this instant of time, the contents of the order made by the user are established. That is, the contents of the order which include images to be printed (information capable of identifying image data such as file names/holder names of the image data read in), the number of prints of the images, settings for rotation, size, other parameters, and reception time are established. The control portion 11 takes the contents as one print job and treats them as information about processing of the printing. The information about processing of the printing is information about processing for creating products, i.e., printed images.

After establishing the contents of the user's order in the processing performed up to the step F104, the control portion 11 performs processing for inserting coins and bills to pay the fee in step F105. For example, a fee corresponding to the number of prints contained in the contents of the order is displayed on the display-and-input portion 3 to prompt the user to insert coins and bills.

When the user inserts the required amount of money from the coin insertion port 7a, the money insertion portion 7 performs processing for payment. The control portion 11 is informed of the total amount of the inserted coins and bills. When insertion of coins and bills to pay the required fee is checked, the control portion 11 goes from step F105 to step F106.

The control portion 11 checks the method of reception selected as described above regarding the order accepted this time in step F106, and performs a branch. In particular, if the decision at the step F104 is that immediate reception is selected, control goes to step F107, where the ordered printing is executed immediately. In this case, the printing portion 9 immediately executes printing based on the information about the printing processing, i.e., the set number of prints of the images selected by the user and their size.

The user can receive the printed photographs by waiting on the spot.

Meanwhile, if the decision at the step F104 is that later reception is selected, the control portion 11 goes from step F106 to F108. The ordered printing is not performed at this time. Information about processing for the printing representing the present orders, i.e., file name/holder name indicating the images to be printed, the numbers of the printed images, settings for rotation and size, and reception time, is registered in the print waiting list.

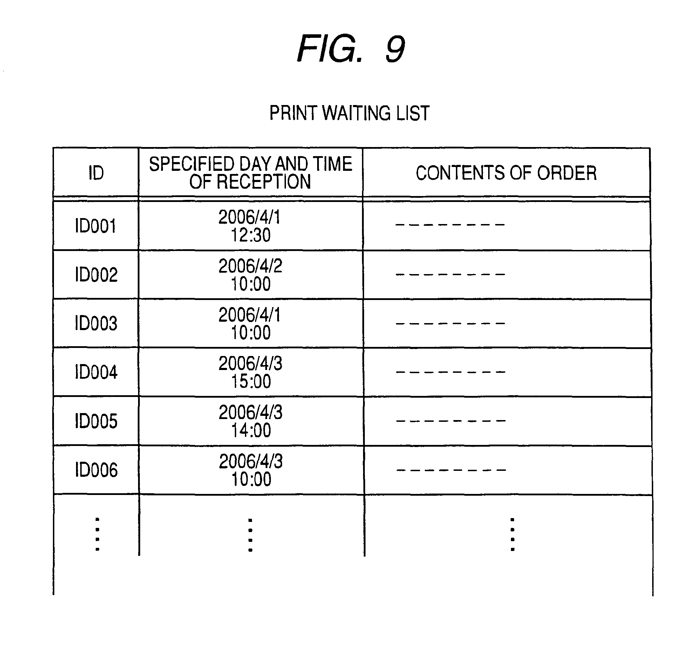

The print waiting list is a list in which the information about printing processing determined in steps F103 and F104 is stored. The list provides information for making a reservation of later printing. Specified day and time at which the products will be received and the contents of the order (selected images and the settings for the numbers of the images or the like) are registered in the list, together with an identification number (ID), for example, as shown in Fig. 9. A storage area for storing the print waiting list is prepared in the storage portion 13. Whenever an order specified to be received later arrives, the CPU 12 adds and registers the information about the printing processing into the print waiting list.

When information about printing processing is registered in the print waiting list in step F108, the CPU 12 adds an ID as an order number. With respect to the specified day and time of reception, relative time and the actual day and time (e. g. , year, month, day, hour, and minute) of day and time which is specified, for example, as "tomorrow" are stored.

Information about printing processing is registered into the print waiting list in this way, and processing at this time is ended. In this case, the customer can leave the printer apparatus 1 and receive printed images later.

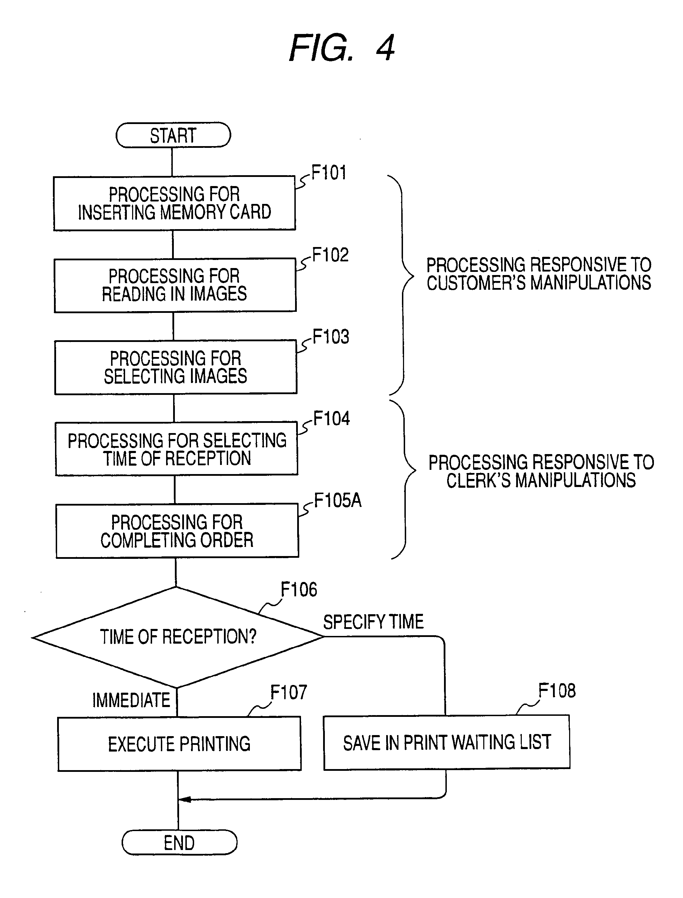

In the case of the printer apparatus 1 not equipped with a money insertion portion as shown in Fig. 1B, the control portion 11 performs processing as shown in Fig. 4. In both Figs. 3 and 4, like steps are denoted by like reference numerals and will not be described in detail later.

The control portion 11 performs processing of steps of F101, F102, and F103 including selection of printed images and ending with settings in response to user's manipulations in the same way as in the case of Fig. 3.

The printer apparatus 1 as shown in Fig. 1B is disposed, for example, in a shop where a clerk receives a fee from a customer. If printed images and the number of prints are determined as the contents of an order in the processing up to step F103, manipulations associated with the processing of steps F104 and F105A is performed by a clerk. In the step F104, the control portion 11 displays a screen for selecting a method of reception. The clerk asks the customer about a method of reception he hopes. In response to it, the clerk makes an input for specifying whether immediate reception or later reception is selected. Furthermore, in the case of later reception, an input for specifying day and time at which the products will be received may be made. The control portion 11 establishes the method of reception by the inputs made by the clerk. Of course, the customer may perform input manipulations regarding reception instead of a clerk.

If the contents of the order have been established by the processing performed so far, the clerk receives the fee for the order from the customer. The clerk then performs a manipulation for executing processing responsive to completion of the order.

In this case, with respect to clerk's manipulations, those manipulations for giving instructions for starting processing in response to completion of an order are enabled. The control portion 11 receives a manipulation for starting the processing in response to a certain action (e.g., entry of a password of the clerk) (step F105A). That is, the control portion accepts a manipulation for starting the processing in response to completion of an order such that the method of manipulation is prevented from being modified arbitrarily by the user. In response to a clerk's manipulation, control goes to step F106. Then, printing of step F107 is carried out in the same way as in the case of Fig. 3 or information about printing processing is registered into the print waiting list in step F108.

Specifically, in the processing illustrated in Fig. 3, printing is performed in practice or registration into the print waiting list is done (i.e., a reservation for later printing) under the condition that the user inserts money. In contrast, in the processing illustrated in Fig. 4, printing is done in practice or registration into the print waiting list is done (i.e., a reservation for later printing) if the clerk receives the fee and performs a given manipulation.

Where the printer apparatus 1 as shown in Fig. 1B can be used free of charge, it is possible that entry of a password is omitted in a manipulation performed in step F105A of Fig. 4. That is, anyone can use the apparatus.

Actual printing operation that is a printing job registered in the print waiting list and based on information about each printing processing is carried out automatically or in response to a clerk's manipulation.

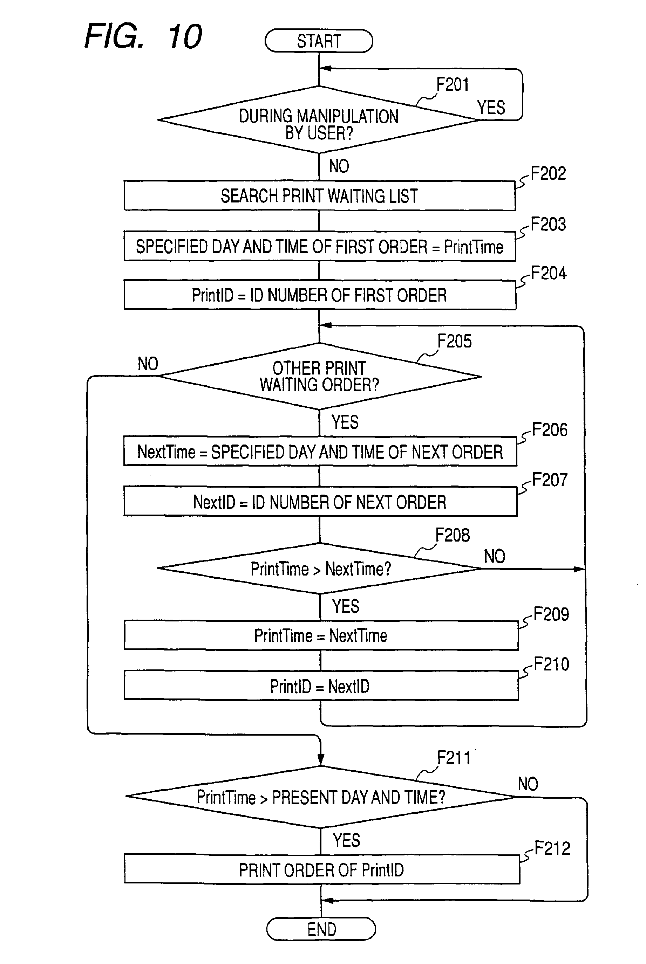

Processing for causing the printer apparatus 1 to automatically perform actual printing based on printing processing information registered in the print waiting list is illustrated in Fig. 10.

The processing illustrated in Fig. 10 is performed when the customer user is not using the printer apparatus 1. That is, when the customer is not using the apparatus, the control portion 11 goes from step F201 to F202.

In step F202, the control portion 11 searches the print waiting list and extracts printing processing information registered at the head at that time from a printing job responsive to a first order, e.g., a large number of sets of printing processing information forming the print waiting list. In step F203, the specified day and time at which the products will be received and which is contained in the information about the first printing processing is substituted into a variable PrintTime. Furthermore, in step F204, the ID number contained in the information about the first printing processing is substituted into a variable PrintID.

Where registration into the print waiting list has been made, for example, as shown in Fig. 9, printing processing information with ID001 is extracted as the printing processing information at the head of the list. The specified day and time "12 o'clock 30 minutes on April 1, 2006" at which the products will be received is substituted into the variable PrintTime and the ID number "DI001" is substituted into the variable PrintID.

The control portion makes a decision as to whether there is any other order for which there is a print wait in step F205 to check whether information about other printing processing is registered in the print waiting list. If the decision is affirmative (Yes), control goes to step F206, where specified day and time at which products will be received and which is contained in the information about the printing processing as a next order in the list is substituted into a variable NextTime. In step F207, the ID number is substituted into a variable NextID. Where the print waiting list is in the state shown in Fig. 9, printing processing information with ID002 is extracted as information about next printing processing. The specified day and time "10 o'clock 00 minute on April 2, 2006" at which the products will be received is substituted into the variable NextTime. The ID number "ID002" is substituted into the variable NextID.

In step F208, the variables PrintTime and NextTime are compared. If the variable PrintTime is earlier in time than the variable NextTime, control returns to the step F205.

On the other hand, if the variable PrintTime is later than the variable NextTime, control goes to step F209, and the day and time of the variable NextTime is substituted into the variable PrintTime. That is, the variable PrintTime is updated. In step F210, the value of the variable NextID is substituted into the variable PrintID. That is, the variable PrintID is updated. Control then returns to step F205.

In step F205, a decision is again made as to whether there is any other order for which there is a print wait. If other printing processing information is registered, control goes to steps F206 and F207. Where the print waiting list is in the state shown in Fig. 9, printing processing information with ID003 is extracted as next printing processing information. The specified day and time "10 o'clock 00 minute on April 1, 2006" at which the products will be received is substituted into the variable NextTime. The ID number "ID003" is substituted into the variable NextID. Processing of the steps F208-F210 is performed.

As a result of the processing of the steps F205-F210, the printing processing information in which the earliest day and time is specified is selected from the print waiting list. That is, the processing of the steps F206-F210 is repeated, and the variables PrintTime and PrintID are updated or maintained according to the results of the comparisons of the days and times of reception. When the decision at step F205 is that there is no longer any other order for which there is a print wait, it can be determined that the print processing information with an ID indicated by the variable PrintID is a print job for which there is the earliest day and time of reception.

If the printing processing information indicating a print job for which there is the earliest reception time is discerned, control goes to step F211, where the present day and time is compared with the day and time indicated by the variable PrintTime, i.e., the reception day and time contained in the printing processing information.

For example, if the present day and time has passed the day and time of reception indicated by the printing processing information, the control portion 11 proceeds from step F211 to F212. The control portion causes the printing portion 9 to execute printing based on the print processing information.

Printed images created by automatically performing printing of images selected from the print waiting list in this way are stored, for example, by a clerk and will be handed to the customer when he or she arrives at the shop.

Meanwhile, if the present day and time has not reached the day and time of reception indicated by the printing processing information, the processing is ended without performing printing.

The processing for making a comparison in step F211 can take various examples. For example, if printing is performed when the present day and time has elapsed the day and time of reception indicated by the printing processing information, it is conceivable that the printing is not early enough for the customer's reception. Therefore, the variable PrintTime may be compared with the instant of time that is 30 minute or 1 hour later than the present day and time to perform printing 30 minute or 1 hour earlier than the day and time of reception. Of course, the printing may be performed still earlier than the day and time of reception. For example, printing may be done successively with respect to the printing processing information that is selected from the print waiting list and contains the earliest day and time of reception without performing the processing of step F211.

After performing the printing based on certain printing processing information in the processing of Fig. 10, the control portion 11 deletes the printing processing information from the print waiting list. Preferably, an area for storing the list of already printed jobs is prepared in the storage portion 13, and each set of printing processing information deleted from the print waiting list is registered in the list of already printed jobs to permit later confirmation or can be restored to the print waiting list.

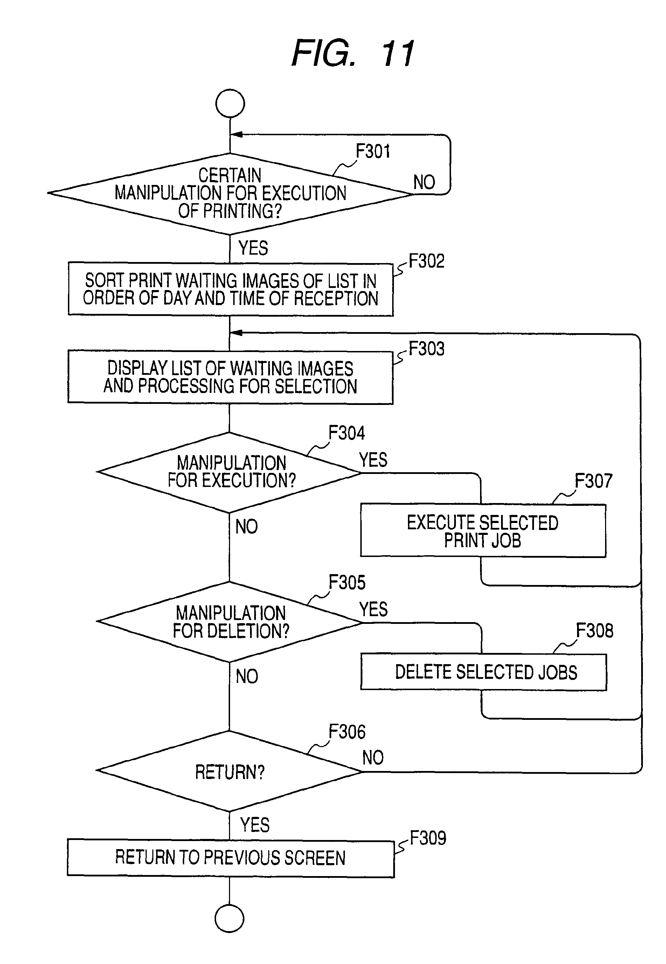

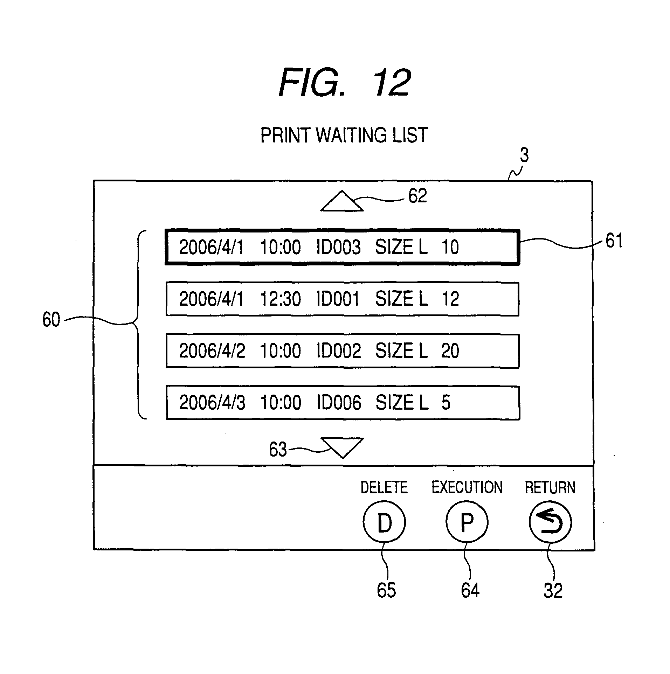

Actual printing operation based on each set of printing processing information that is a print job registered in the print waiting list is next described by referring to Figs. 11 and 12 regarding a case where the operation is performed in response to manipulations of a clerk in the shop.

A mode of manipulation in which only certain persons such as clerks are allowed to manipulate the printer apparatus 1 is imparted to it. In this mode, a password is entered or a special procedure of manipulations not revealed to general customer users is performed. If such certain manipulations are performed for printing based on the printing processing information registered in the print waiting list, the control portion 11 proceeds from step F301 to F302 in the processing illustrated in Fig. 11.

In the step F302, the control portion 11 performs processing for sorting each set of printing processing information registered in the print waiting list in the order of day and time of reception. In step F303, the contents of the print waiting list are displayed as result of the sort on the display-and-input portion 3 in the order of day and time of reception.

An example of display is shown, for example, in Fig. 12. In this display screen, sets of printing processing information indicating the contents of the print waiting list as shown, for example, in Fig. 9 are shown as a list 60 in the order of day and time of reception. Furthermore, a cursor 61 for selecting various sets of printing processing information, a forward button 62 and a next button 63 for moving the displayed contents of the list forward or backward, are displayed. In addition, an execution button 64, a delete button 65, the return button 32, etc. are displayed.

A clerk can perform manipulations for executing printing or deleting unwanted printing processing information while watching the displayed contents.

When the clerk touches the forward button 62 or next button 63, the control portion 11 moves the contents of the list displayed accordingly in a forward or backward direction. When a set of printing processing information on the list is touched, the control portion 11 places the set of printing processing information at the position of the cursor 61, thus clearly showing the selected set of printing processing information.

The control portion 11 performs display processing responsive to these manipulations in step F303.

The control portion 11 monitors the manipulations of the execution button 64, delete button 65, and return button 32 as clerk's manipulations during steps F304, F305, and F306.

Where the clerk touches the execution button 64 while a certain set of printing processing information is being selected by the cursor 61, the control portion 11 proceeds from step F304 to F307. Printing indicated by the selected set of printing processing information is executed. That is, the printing based on the selected set of printing processing information is executed by the printing portion 9.

Printed images created by such execution of printing are stored by a clerk. When the customer arrives at the shop later, the images will be handed to the customer.

The clerk can select such print jobs, for example, in a non-busy time where the printing apparatus 1 is used infrequently, and can arbitrarily execute the printing based on the printing processing information in a print waiting state.

Where the clerk touches the delete button 65 in the state in which a certain set of printing processing information is being selected by the cursor 61, the control portion 11 proceeds from step F305 to F308, and performs processing for deleting the selected set of printing processing information from the print waiting list. This deletion from the print waiting list can be performed, for example, in cases including the case in which the customer asks cancellation of the order and the case in which printing indicated by the set of printing processing information has been completed by the above-described manipulation for execution.

When printing is performed in step F307, the control portion 11 may delete the set of printing processing information from the print waiting list at the instant when the printing is completed without any manipulation of the clerk.

Where there is a request for cancellation or a set of printing processing information is deleted from the print waiting list because of completion of printing, the set of printing processing information may be preferably registered in a list of already printed images. This permits later confirmation or restoration to the print waiting list.

Where the clerk manipulates the return button 32, the control portion 11 goes from step F306 to F309 and returns to the previous screen. For example, the contents of the print waiting list, for example, as shown in Fig. 12 are stopped from being displayed, and a normal screen is regained.

The structure and operation of the printer apparatus 1 that implement an embodiment of the present invention have been described so far. This printer apparatus 1 permits a customer to select whether he wishes to receive printed photographs on the spot when an order for printing of images is made to the printer apparatus 1 in a shop even if he may wait or the customer receives the printed photographs later.

Accordingly, for example, if a person places an order for printing of a large number of images and specifies later printing and later reception, then he is not required to wait for a long time on the spot until the printing ends. That is, the apparatus can be so designed that a person who dislikes waiting for a long time can be prevented from waiting on the spot.

For example, because of the processing illustrated in Fig. 10 or Fig. 11, printing based on sets of printing processing information registered in the print waiting list is performed automatically or in response to clerk's manipulations. This means that the printing is done during non-busy periods for the printer apparatus 1. That is, the printer apparatus 1 can be run efficiently.

Where sets of printing processing information registered in the print waiting list are printed as processing illustrated in Fig. 11 in response to clerk's manipulations, the sets of printing processing information (print jobs) are sorted in the order of day and time of reception and displayed. This can facilitate the clerk's work for causing images having earlier times of reception to be printed in this order.

Obviously, the structure of the printer apparatus 1 and the procedure of processing operations are not limited to those of the above-described embodiment. Rather, various modifications are conceivable.

In the description of the above embodiment, the printer apparatus 1 is described as an example of the product-creating apparatus according to an embodiment of the present invention. The invention can also be applied to other various product-creating apparatus.

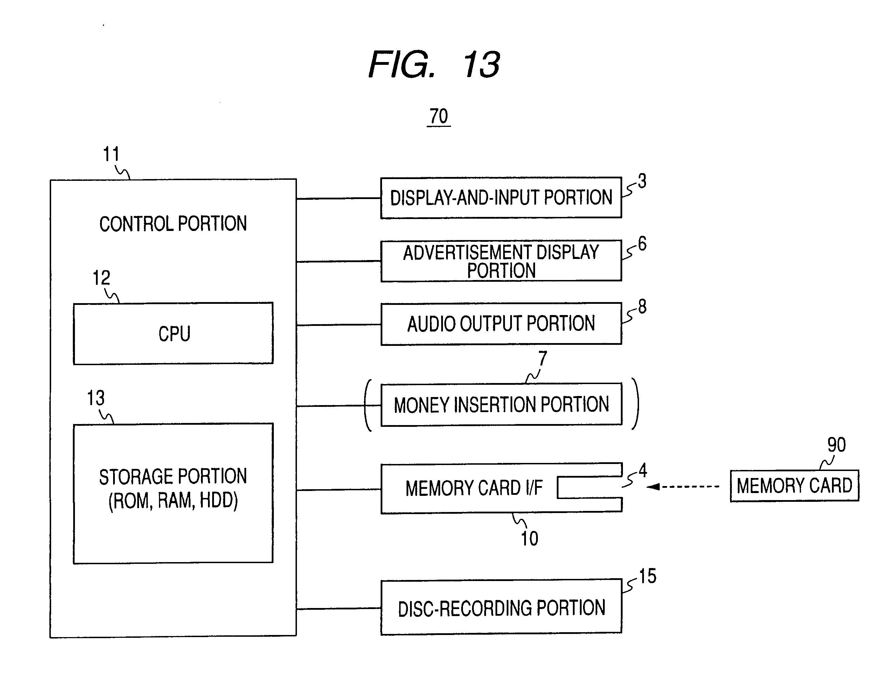

A disc recorder apparatus 70 is shown as another embodiment in Fig. 13. This disc recorder apparatus 70 is an apparatus for recording image data held in a memory card 90 carried by a user onto a write-once disc or rewritable disc as an optical disc (such as compact disc, DVD, or other optical disc) and offers the disc to the customer.

The apparatus shown in Fig. 13 is similar in configuration with the apparatus shown in Fig. 2. Like components are indicated by like reference numerals in both Figs. 2 and 13 and will not be described below. In this case, a disc-recording portion 15 is mounted as a product-creating portion instead of the printing portion 9 shown in Fig. 2. The disc-recording portion 15 stocks numerous unwritten optical discs, and operates to record specified image data onto the optical discs according to instructions from the control portion 11.

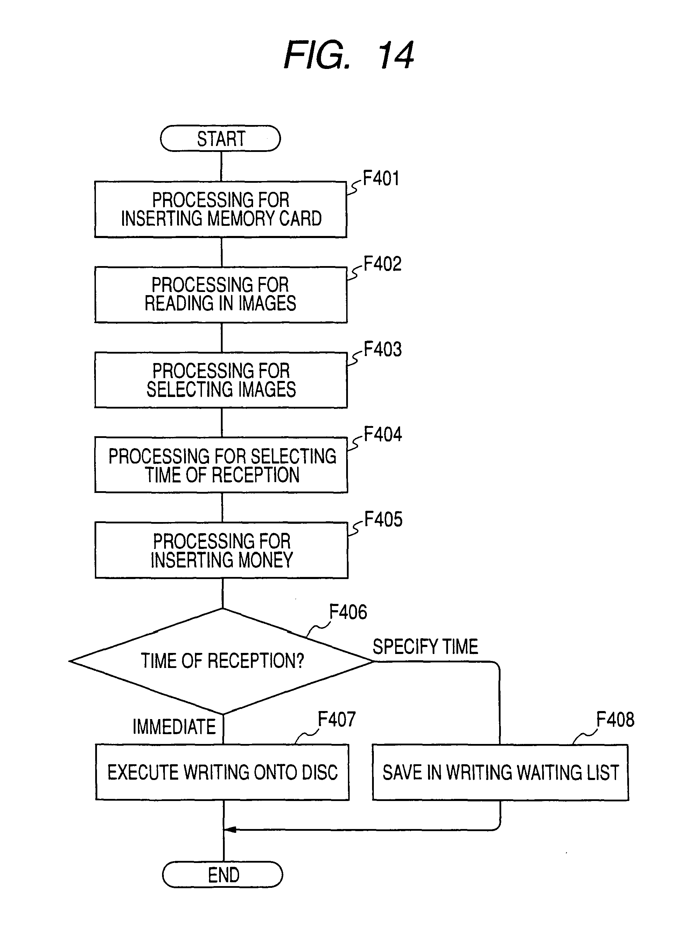

The control portion 11 performs the processing illustrated in Fig. 14, for example, based on customer's manipulations. In Fig. 14, steps F401-F406 are similar to the steps F101-F106 illustrated in Fig. 3. That is, when a memory card 90 carried by a user is loaded into a memory card slot 4, the control portion 11 reads image data from the memory card 90, performs a selection of image data to be recorded later, and makes settings (e.g., selection of a method of compression and a bit rate) based on user's manipulations.

In step F404, the day and time of reception is confirmed in response to a user's instruction. In response to insertion of money, control goes from step F405 to F406.

Where the user hopes for immediate reception, the control portion 11 causes the disc-recording portion 15 to write the selected image data onto an optical disc in step F407. In this case, the user can receive the optical disc that has been created as a finished product by waiting on the spot.

Meanwhile, where the user hopes for later reception, the control portion 11 goes to step F408, where writing processing information (information about processing for creating finished products) about the present writing is registered into the writing waiting list.

In the same way as the printing processing information used in the example of the printer apparatus 1, the writing processing information includes file name/holder name indicating the selected image data, recording settings for sets of image data, and information about the day and time of reception.

With respect to the writing processing information registered in the writing waiting list, writing onto an optical disc is executed automatically or in response to a clerk's manipulations because of the processing illustrated in Fig. 10 or 11.

The disc recorder apparatus 70 for creating products as optical discs in this way can yield the same advantages as the printer apparatus 1.

A program according to an embodiment of the present invention can be realized as a program for causing the control portion 11 to perform processing as illustrated in Fig. 3 or 14 in a product-creating apparatus such as the printer apparatus 1 or disc recorder apparatus 70.

Such a program can be previously recorded either in a system HDD acting as a recording medium in an information processor within a computer system and the like or in a ROM and the like within a microcomputer having a CPU.

Alternatively, the program can be temporarily or permanently stored (or recorded) in a removable recording medium (such as flexible disc, CD-ROM (compact disc read only memory), MO (magnetooptical) disc, DVD (digital versatile disc), magnetic disc, or semiconductor memory). Such a removable recording medium can be offered as so-called packaged software. The program can be installed into a computer system by being offered by a CD-ROM, DVD-ROM, or the like.

This program can be installed from a removable recording medium. In addition, the program can be downloaded from a download site via a network such as a LAN (local area network) or the Internet.

It should be understood by those skilled in the art that various modifications, combinations, sub-combinations and alterations may occur depending on design requirements and other factors insofar as they are within the scope of the appended claims or the equivalents thereof.

## Claims

1. A product-creating apparatus comprising:
an image acquisition portion acquiring image data;
a product-creating portion creating products using the image data;
a manipulation input portion permitting one to perform manipulations for making settings to create the products using the image data and to perform a specifying manipulation to select a method of reception from immediate reception of the products and later reception; and
a control portion, which when the image data is acquired by the image acquisition portion and the immediate reception is specified by a manipulation performed through the manipulation input portion to specify a method of reception, causes the product-creating portion to execute creation of the products regarding the acquired image data and which, when the later reception is specified by a manipulation performed through the manipulation input portion to specify a method of reception, performs processing for registering information about the processing for creating the products regarding the acquired image data into a creation waiting list.

2. A product-creating apparatus as set forth in claim 1, wherein the product-creating portion is a printing portion printing image data and creates printed images that are the products using the image data.

3. A product-creating apparatus as set forth in claim 1, further comprising a money-receiving transaction portion, and wherein the control portion controls the product-creating portion to execution creation of products regarding the acquired image data or performs processing for registering product-creation processing information about the acquired image data into the creation waiting list in response to confirmation of payment for a fee performed by the money-receiving transaction portion.

4. A product-creating apparatus as set forth in claim 1, wherein the manipulation input portion permits one to perform an input by a manipulation for starting processing, and wherein the control portion controls the product-creating portion to execute creation of products regarding the acquired image data or performs processing for registering product-creation processing information about the acquired image data into the creation waiting list when the manipulation input portion confirms the manipulation input for starting processing.

5. A product-creating apparatus as set forth in claim 1, wherein the control portion causes the product-creating portion to execute creation of products based on the product-creating processing information registered in the creation waiting list when any manipulation using the manipulation input portion is not performed.

6. A product-creating apparatus as set forth in claim 1, wherein
when the manipulation for specifying a method of reception specifies later reception, the manipulation input portion permits manipulations for specifying day and time,
when later reception is selected as a result of the manipulation for specifying a method of reception using the manipulation input portion, the control portion registers product-creating processing information including information about the specified day and time into the creation waiting list, and
the control portion causes the product-creating portion to execute creation of products based on the product-creating processing information and based on a result of a comparison between the information about day and time and the present day and time regarding the product-creating processing information registered in the creation waiting list.

7. A product-creating apparatus as set forth in claim 1, further comprising a display portion, and wherein when a manipulation for requiring a list to be displayed is performed using the manipulation input portion, the control portion displays the product-creating processing information registered in the creation waiting list on the display portion and causes the product-creating portion to execute creation of products based on product-creating processing information which is included in the displayed product-creating processing information and which is selected by a selection manipulation performed using the manipulation input portion.

8. A method of creating products by a product-creating apparatus having an image acquisition portion acquiring image data, a product-creating portion creating products using the image data, and a manipulation input portion which permits one to perform setting manipulations for creating the products using the image data and which permits one to perform specifying manipulations to select a method of reception from immediate reception of the products and later reception, the method comprising the steps of:
acquiring the image data by the image acquisition portion;
accepting the manipulations for specifying a method of reception from the manipulation input portion;
causing the product-creating portion to execute creation of the products regarding the acquired image data in a case where the immediate reception is specified by the manipulations for specifying a method of reception using the manipulation input portion; and
performing processing for registering product-creating processing information regarding the acquired image data into a creation waiting list in a case where the later reception is specified by the manipulation for specifying a method of reception using the manipulation input portion.

9. A program for controlling operation of a product-creating apparatus having an image acquisition portion acquiring image data, a product-creating portion creating products using the image data, and a manipulation input portion which permits one to perform setting manipulations for creating the products using the image data and which permits one to perform specifying manipulations to select a method of reception from immediate reception of the products and later reception, the program performing the steps of:
acquiring the image data by the image acquisition portion;
accepting the manipulation for specifying a method of reception from the manipulation input portion;
causing the product-creating portion to execute creation of the products regarding the acquired image data in a case where the immediate reception is specified by the manipulation for specifying a method of reception using the manipulation input portion; and
performing processing for registering product-creating processing information regarding the acquired image data into a creation waiting list in a case where the later reception is specified by the manipulation for specifying a method of reception using the manipulation input portion.
